# EUROPEAN PATENT SPECIFICATION

(11) **EP 1 015 735 B1**
(45) Date of publication and mention of the grant of the patent: **04.10.2001**
(21) Application number: 98901326.3
(22) Date of filing: 05.02.1998
(51) Int. Cl.: F01C 1/344, F04C 2/344

(54) **SCREW CONVEYOR FOR THE TRANSPORT OF LIQUID SUBSTANCES AND/OR LUMPS OF MATERIALS**
SCHNECKENFÖRDEREINRICHTUNG FÜR FLÜSSIGKEITEN UND/ODER MATERIALBROCKEN
TRANSPORTEUR A VIS POUR LIQUIDES ET/OU BLOCS DE MATERIAUX

(30) Priority: 07.02.1997 DK 13997
(43) Date of publication of application: 05.07.2000
(73) Proprietor: J.S. Maskinfabrik A/S, 9800 Hjorring (DK)
(72) Inventor: SORENSEN, Freddy, DK-9850 Hirtshals (DK)
(74) Representative: Larsen, Hans Ole
(86) International application number: DK9800045
(87) International publication number: WO9835135

(56) References cited:
- DE-A- 2 415 620
- FR-A- 2 303 973
- US-A- 642 785
- US-A- 3 254 570
- US-A- 3 255 704
- US-A- 4 376 620

## Description

The invention concerns a screw conveyor of the kind disclosed in claim 1 and the use thereof.

Screw conveyors which consist of two screws which lie up against each other are known, but where these are used to feed sausage skins with forcemeat. These screw conveyors cannot be used for the transport of liquid and lumpy substances/items such as sludge and offal or larger items, partly because their construction is not sufficiently robust, and partly due to the fact that the screws do not lie closely together and thus do not give rise to a tight pump construction. Finally, the windings are not configured in such a manner that they have sufficient strength, in that the windings will often be tapered out towards the screw housing itself in order to provide a transport which is optimal for sausage forcemeat.

From Danish Patent 117,615 there is known a screw conveyor for the transport, for example, of sludge, and consisting of a screw and a pressure pad which engages with the screw with blades arranged for this purpose. The sealing between the pressure pad and screw is effected by springs which, with time, have a tendency to become weak, so that the screw conveyor does not remain tight. Moreover, larger items have difficulty in passing through the screw conveyor, and can thus cause damage to the machinery.

A screw conveyor of the kind described in the introduction is known from USA Patent No. 3,733,152. Among other things, this screw conveyor can be used for the pumping of sludge of a relatively thinly-flowing character. The screw conveyor cannot be used for the handling of sludge with a high content of dry matter, nor for handling offal and the like where the substance which is to be handled and transported is very viscous and/or contains large lumps and materials which are difficult to process such as pieces of bone.

DE-A-27 10 263 discloses a screw conveyor suitable for viscous material. but there is a risk that the material in the compression chamber will be pressed together so much that due to this friction the movement forwards of the screws is prevented.

US-A-3 057 665 discloses a screw conveyor suitable for viscous material. The pump is not suitable for thin material, and furthermore there is a risk that the material in. the compression chamber will be pressed together in such a way that it will hinder the movement of the screw conveyors due to the friction.

It is the object of the invention to provide a screw conveyor which is not emcumbered with the above-mentioned disadvantages, and whereby there is achieved a robust and tight screw conveyor which is suitable for transporting thin-flowing as well as viscous materials such as offal with lumps of different sizes, without any risk that the sludge or lumpy material runs back, and without any risk of damage to the screw conveyor. This object is achieved with a screw conveyor of the kind disclosed in the preamble, and where each of the screw windings, at least in the compression chamber, have a thickness at their periphery which is at least 60% of the thickness elsewhere on the same winding, and that the number of windings for each screw in the compression chamber is greater than two, and that the distance between the windings in the compression chamber increases towards the compression chamber's discharge opening for each individual screw, in that the pitch of the windings in the compression chamber is progressive, so that the distance between the first and the second winding is less than the distance between the second and the third winding, etc.

The thickness mentioned is to be measured parallel to the axial direction.

As a consequence of the screw conveyor comprising more than two windings in the compression chamber, there is no risk of reflux at the moment that thin-flowing material is transported in the screw conveyor. Moreover, the screw conveyor is particularly robust as a result of the thickness of the windings, so there is no risk of any bending of the windings in that part which lies outwards towards the housing itself, in that also these are made of a strong material. It is hereby ensured that the screw conveyor can also transport lumpy material while at the same time retaining the tightness. The material which is handled in the compression chamber is exposed to a lower friction than that which, for example, will arise in connection with the USA Patent publication No. 3,733,162, the reason being that the windings having a progressive pitch. There will hereby arise a lower friction between the wall of the compression chamber and the material being handled, the result being that it is possible to handle very lumpy and very viscous material.

The way in which the screw conveyor works is that the material which is desired to be transported is introduced into the inlet opening, after which the screw windings are then made to rotate in opposite directions to each other, and the aforementioned construction ensures that no reflux takes places between the two screws. Also, the windings naturally lie tightly up against the housing in the area in which the actual compression/transport of the material takes place. Since the windings are further of a robust configuration, in the sense that it is ensured that the windings have a given thickness in relation to that thickness the windings have in towards the spindle, there is no risk that a bending of the windings will occur.

By providing a screw conveyor according to the invention as disclosed in claim 2, an optimal dimensioning of the rate of increase in the compression chamber is achieved, so that the friction is considerably reduced at the same time that the function of the screw conveyor is maintained.

By providing a screw conveyor according to the invention as further disclosed in claim 3, it is achieved, as a consequence of the consistency of the material being able to be changed, that large lumps can be separated into smaller parts and, if desired, that frozen material can be thawed out, or that the frozen material can retain its temperature by feeding coolant through the relevant means.

By providing a screw conveyor according to the invention as disclosed in claim 4, it is achieved that a scissor function is provided so that larger pieces and lumps can be cut into smaller pieces when these are clamped against the cutting face as a consequence of the rotation of the screw and its feeding of the substance. The knife function can be implemented by providing a knife in front of or as an integrated part of the inlet opening, or it can be a part of the inlet opening itself, in that this is configuerd with a sharp edge with a cutting face preferably in the same direction as the transport direction. It is possible to provide the function partly integrated and partly as a detachable cutting function.

By providing a screw conveyor according to the invention as disclosed in claim 5, the possibility is achieved for a higher degree of material comminution, so that this assumes a mushy character. The plate can be disposed after the knife function or it can work without hereby being dependent on the kind of substance it is desired to transport through the screw conveyor.

By providing a screw conveyor according to the invention as disclosed in claim 6, the possibility is also achieved of transporting deep-frozen items which thus become easier to handle, and with less risk of stoppage of the screw conveyor. By and large, the temperature of the screw conveyor can be adjusted to suit the temperature of the items/the material transported.

By providing a screw conveyor according to the invention and as further disclosed in claim 7, an expedient way is achieved in which to carry out a temperature adjustment of the substance, and where this takes place during the actual processing. There is hereby achieved the further possibility of reducing the risk of the material adhering to the surface of the screw windings, for example by changing the temperature of the windings.

By providing a screw conveyor according to the invention as disclosed in claim 8, it is achieved that the transport direction is maintained and that the pressure is retained.

By providing a screw conveyor according to the invention as disclosed in claim 9, it is achieved that there is room for the mass which is to be transported, so that there does not occur a substantial increase in pressure which cannot be tolerated by the machinery, and that the medium transported suffers limited/minimal damage.

By providing a screw conveyor according to the invention as disclosed in claim 10, it is achieved that the screw conveyor is easier to clean and that it is easier to remove pieces which may become wedged between the screws or between screws and walls.

By providing a screw conveyor according to the invention as disclosed in claim 11, it is achieved that there is room for-the material which is poured down into the screw conveyor's inlet chamber, so that this does not run over, and that the transport in the compression chamber is ensured without the windings getting damaged or displaced as a result of the high pressure which arises when the windings lie closely up against each other and between screws and housing.

By providing a screw conveyor according to the invention as disclosed in claim 12, a good transport is achieved, and where the risk of reflux is minimized. The screw conveyor will thus be particularly tight, in that two roll-lines are produced for each winding, i.e. one for the upper surface and one for the lower surface.

By providing a screw conveyor according to the invention as disclosed in claim 13, there is achieved a tight pump housing which is suitable for the transport of items without these suffering any damage, for example when the screw conveyor is used for the unloading of fish.

By providing a screw conveyor according to the invention as disclosed in claim 14, it is achieved that the screw construction of the screw conveyor becomes particularly strong and stable, whereby the risk of the windings not holding tight is reduced to a minimum, in that as a result of their strength the windings will not be able to be displaced, and in that the windings are produced so that the two screws lie closely up against each other.

The invention also concerns the use of a screw conveyor for the transport of thinly-flowing and viscous sludge and offal.

The screw conveyor can, however, also be used for the pumping of sludge, fish, fish offal, slaughterhouse offal, dough, preserves, sediment, press-cakes from fishmeal factories and similar substances and materials.

The invention will now be described in more detail with reference to the drawing, where
- fig. 1: shows a screw conveyor seen from above,
- fig. 2: shows the screw conveyor in fig. 1 seen from the side in sectional view,
- fig. 3: a and b show a sectional view along the line III-III in fig. 2 in two different example embodiments,
- fig. 4: shows a sectional view along the line IV-IV in fig. 1,
- fig. 5: shows a second screw conveyor seen in section from the side,
- fig. 6: shows a sectional view along the line VI-VI in fig. 5,
- fig. 7: shows a third example embodiment of a screw conveyor seen in section and from the side,
- fig. 8: shows a sectional view of a fourth example embodiment of a screw conveyor seen from the side,
- fig. 9: shows a sectional view along the line IX-IX in fig. 8,
- fig. 10: shows a fifth example embodiment of a screw conveyor seen from above,
- fig. 11: shows a sectional view of a sixth example embodiment of a screw conveyor seen from the side,
- fig. 12: a and b show the construction shown in figs. 1 and 2 provided with a cooling/heating jacket, and
- fig. 13: shows a section through a screw.

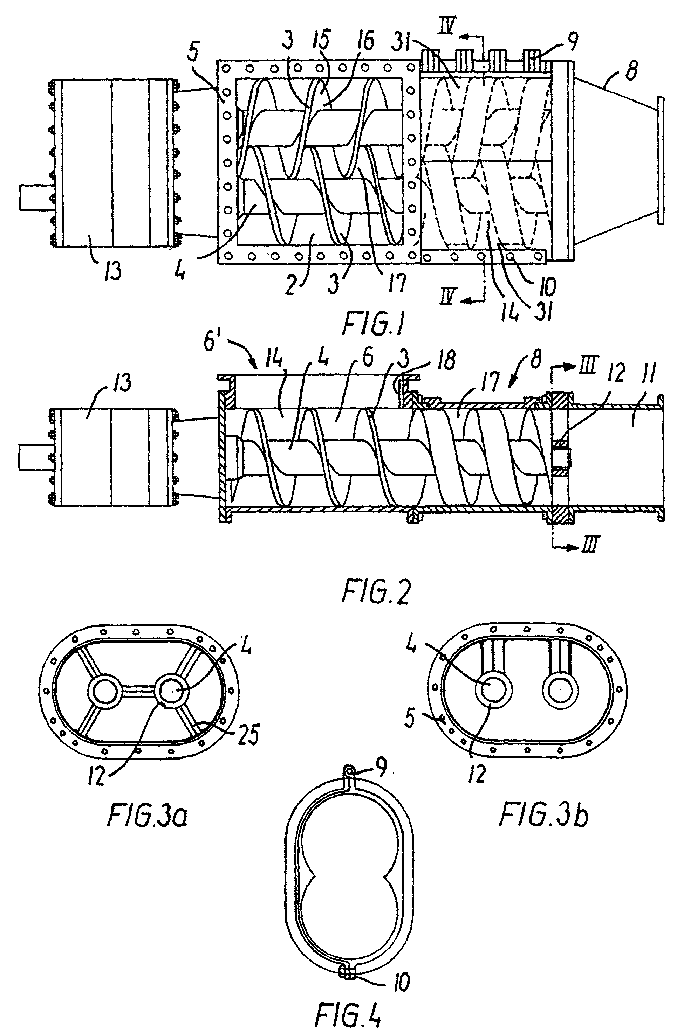

A prototype of a screw conveyor (1) is shown in figs. 1 and 2 and comprises a housing (5) in which two screws (2) are disposed. The housing (5) has an inlet opening (6') which opens out in the inlet chamber (6) itself. From the inlet chamber (6), the screw extends further to the compression chamber (7) where processing and further feeding forwards of the substance takes place to the discharge pipe (11).

The screw (2) is built up by an axle (4) and windings (3), said windings typically being made of steel, and where the screw (2) can with advantage be produced by milling out from a block. There is hereby ensured a very stable screw which can convey items without risk of the axle or windings being subject to bending.

The axles for the screws are connected to a gearbox (13) which effects the rotation of the axles, said axles rotating towards each other. In the inlet opening (6') it can be expedient to place a cutting function (18) which is either in the form of a typical knife arrangement which can be detached and mounted, or which constitutes an integral part of the edge itself.

The inlet opening can be equipped with an inlet hopper, possibly with a feed worm inserted. The size and shape of the inlet hopper are adapted to suit the material which is to be pumped. When pumping waste products, slaughterhouse offal, frozen products, poultry offal and fish offal, and when cutting heads are mounted, the inlet to the pressure chamber/compression chamber must be provided with a knife arrangement.

The inlet hopper and the pressure/compression chamber can be provided with cooling/heating jackets. In order to pump frozen products, it is necessary to introduce heat.

When cutting and/or pumping meat products it is necessary to cool the products in order to compensate for the increase in temperature which occurs in connection with the cutting/pumping.

The pressure chamber/compression chamber can be arranged to be opened for cleaning and the removal of possible foreign bodies.

The object of this knife function is to comminute possibly large lumps before these enter the compression chamber (7).

The windings (3) are configured in such a manner that their thickness at the periphery at a minimum constitutes 60% of that thickness which they may have at any other point on the same winding. There is hereby achieved a robust screw without any risk of deflections. It is expedient to aim at providing the winding with the same thickness from its abutment with the axle out towards the housing.

As indicated, the one end of the axle (4) is fastened to or mounted in a gearbox, and at the other end it can be suspended in an axle bearing (12). This is shown in figs. 3a and 3b, where the axle (4) is suspended in an axle bearing (12). The axle bearing (4) is connected to the housing via struts (25) which can either extend out from the axle bearing to the housing in a star-shaped fashion, preferably two in number and with a strut from the one bearing to the other bearing (see fig. 3a or 3b), or where each axle bearing is suspended by a single, solidly-constructed strut (25). The actual discharge pipe (11) lies after the axle suspension.

The compression chamber (7) can expediently be opened, in that this part of the housing (5) has a hatch (8) which is connected to the housing (5) by a hinge (9), and at the other side is fastened to the housing by means of securing elements (10), typically by means of bolts.

A sectional view of such a hatch construction is shown in fig. 4.

A space (14) is formed between the windings, said space (14) in the compression chamber also being demarcated by the axle (4) and the housing (5), whereby there is formed a pressure chamber (31) in which the material is fed forwards by the rotation of the axles.

Furthermore, the windings on the one axle in the compression chamber have a thickness which corresponds to the space between the windings on the other axle. In this manner, two roll-lines are produced for each winding in the compression chamber. The windings constitute more than two in number for each axle in the compression chamber.

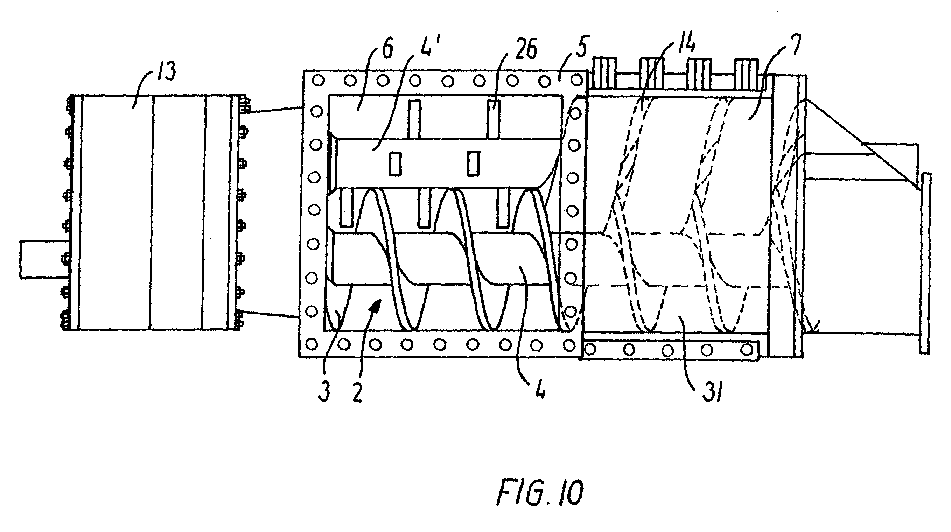

A second example embodiment of the screw conveyor is shown in fig. 10, which shows a screw conveyor seen from above, and where the rotating axles in the inlet chamber are shown. The one axle is formed as a screw comprising an axle (4) with helical windings (3). The other axle (4') is provided with struts (26) extending out from the axle at right-angles, which during rotation will rotate in between the windings (3) on the first axle (4). With this configuration it is ensured that the substance is kneaded and transported the correct way into the compression chamber (7). This configuration is especially applicable for the transport of materials with large lumps, in that the size of the individual pressure chamber (31) is greater due to the configuration of the screw. On the other hand, it is only the one screw which transports the material. Therefore, in principle, only one inlet is necessary, this being half as big as that shown. This, however, will increase the risk of blockages in the inlet. The size of the inlet is therefore retained, and on the one axle there are mounted struts (26) which "tip" material from this side of the inlet over to the other side where transport of the material is effected, i.e. in the pressure chamber (31).

Both of the axles (4 and 4') in the compression chamber (7) itself will be provided with windings. Here it can be expedient to provide the axle (4') with windings of a thickness which is radically greater than the windings of the through-going screw, and possibly such that each winding on the axle (4') has an upper and a lower abutment partly against the winding (3) to the right of the through-going screw's windings, and partly on the winding (3) to the left. There hereby arise two roll-lines (17). The pressure chamber (31) will exist only along the one axle (4).

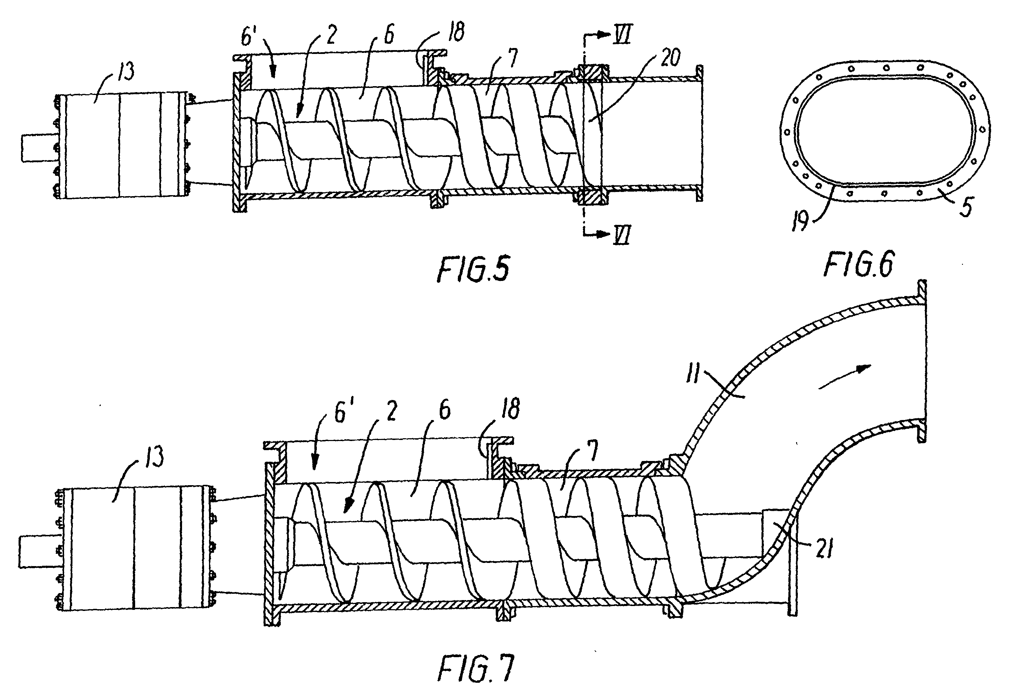

Fig. 5 shows a second suspension of the axle itself, in that here the support end (20) is suspended in a sleeve (19) which lies up against the inner periphery of the housing. The axle's last winding (3) thus slides in the sleeve (19). The advantage with this system is that there are no bearings which can be thrown out of alignment and break down. A sectional view through the sleeve is seen in fig. 6, and shows the sleeve (19) lining the inner surface of the housing (5) in an even layer.

The support end (20) can also have another suspension, such as that shown in fig. 7, and where the axle (4) in the support end is suspended in a closed bearing. Here, the discharge pipe (11) extends in a swan-neck (11), so that the substance does not flow past the bearing (21) but in an upwardly-extending arc around it.

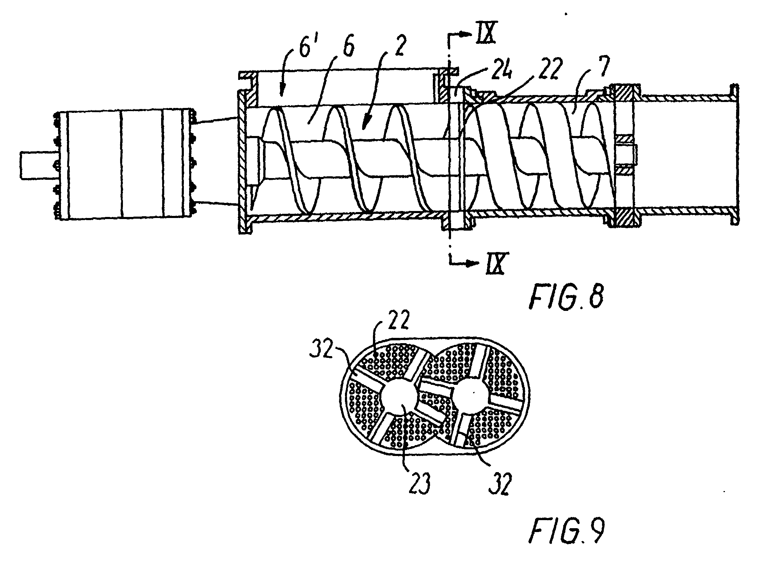

The screw conveyor can with advantage be equipped with a knife function which is an integral part hereof, i.e. that it is constituted by the edge itself, or it can be detachable. Moreover, the knife function can be totally replaced by the insertion of a plate (22) such as that seen in fig. 8 and in fig. 9.

The plate (22) is arranged between the compression chamber and the inlet chamber and is configured more or less in the same way as the plates used in the known mincing machines. Through each individual plate there is a through-going bore (23) for the passage of the axle for each screw (2). The plates (22) are stationary and are equipped with a set of knives (32) which are rotatable, and by the rotation of the screw itself there occurs a pressing of the substance through the holes in the plate (22). There can hereby be effected a comminution of the substance. The plate function is naturally inexpedient whenever the material contains large lumps and irregular items. In such cases, the use of a knife function will always be chosen, though possibly supplemented with the plate function.

The thickness of the windings is of such a character that it is expedient for this to be the same for those windings which lie in the compression chamber, and for the windings which lie in the inlet chamber. On the other hand, there is a difference in the thickness of the windings in the inlet chamber compared with the thickness of the windings in the compression chamber.

Great differences in pressure arise in the compression chamber, and for this reason the windings here have a considerably greater thickness. This means that the space (14) between the windings is naturally smaller in the compression chamber compared with the spaces in the inlet chamber. The diameter of the axle itself lies in the order of 125 mm to 75-80 mm, while the corresponding diameter for the windings lies from 350 mm down to 150 mm. In such case the distance between the windings will lie in the order of 200 mm to 60 mm. The outside diameter of the screws will typically lie from 150 mm to 500 mm.

It is essential for the invention that the pitch of the windings in the compression chamber is progressive, so that the distance between the 1st and 2nd windings is less than the distance between the 2nd and the 3rd winding and so on.

The distance between a set of windings is typically 5-50%, preferably 15-45% greater than the distance between the preceding set of windings.

The screws are preferably made by being milled out of a solid block of stainless steel. Here it is important that the windings are produced with a good thickness, and that at the periphery they do not taper out towards the housing, but have a good contact surface so that good sealing arises between the winding and the housing, at least in the compression chamber.

The production of the screws is effected by first producing a master screw with the dimensions which are expedient in connection with the material which is desired to be transported. There is then produced a so-called sister screw on the basis of the master screw, so that a relatively close contact is achieved between the two screws during the processing.

The sister screw is produced by first suspending the master screw and then marking on a block where contact of the master screw shall take place. There is then effected a slight rotation of the master screw followed by a milling-out of the block in the production of the sister screw. The sister screw is thus always a function of the shape of the master screw, in that a total rotation of the master screw is effected and at the same time a corresponding milling-out of the block in the production of the sister screw.

The screws can also be produced by moulding or by the welding-together of the components and subsequent machining.

In connection with the suspension of the axle itself, it is important that there is a good seal between the bearing suspension and the substance transported, in that the substance will often be of a very aggressive character. For this purpose, the aforementioned suspension possibilities for the support end (20) have been developed, and where it should be noted that the seals can with advantage be configured as labyrinth seals in connection with the gaskets inserted for the protection of the bearings.

Due to its very tight configuration, the screw conveyor can be used for the pumping of both liquid substances and dry materials as well as larger items. The screw conveyor is able to rotate in both directions, which means that it can be used not only for feeding material forwards but also for sucking material upwards. For example, the screw conveyor can with advantage be used for the unloading of ships' containers, since that vacuum which arises in connection with the function is not lost, the reason being that the roll-lines (17) in between provide for the close contact, and in that there is also close contact between housing and the screw conveyors.

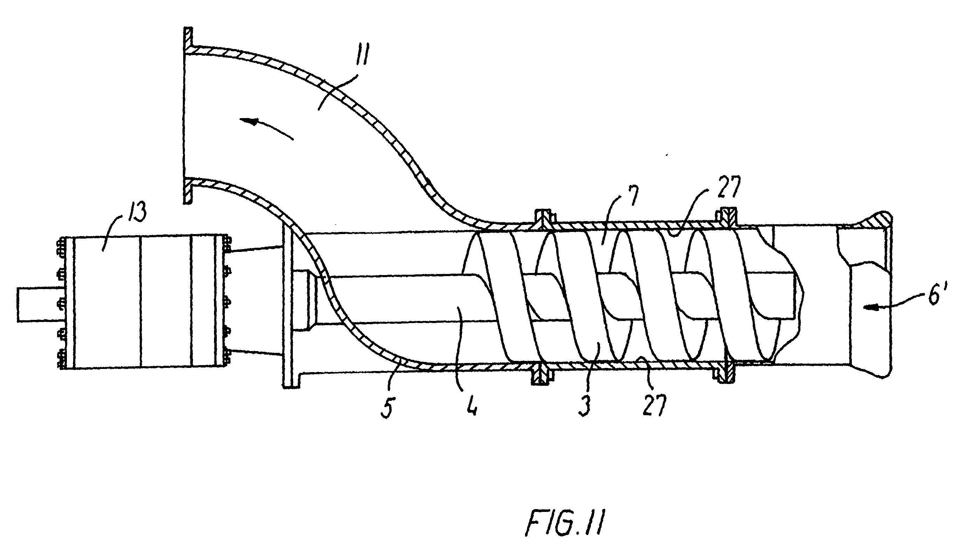

An example of such a screw conveyor is shown in fig. 11, where the inlet opening is arranged in extension of the screw conveyor, and thus not on the side surface as otherwise seen in the other examples. The inlet opening leads into the inlet chamber (6) and thereafter to the compression chamber (7). The axle (4) has a support end (20) which lies in the inlet chamber. The gearbox (13) lies at the other end and is connected to the axle (4) which has passage through the housing (5) for suspension in the gearbox (13). The housing (5) is oval in shape and thus does not surround the two screws (2), but at the discharge pipe (11) will preferably be shaped as a swan-neck through which the pumped-up material runs out.

In order to ensure such a tight a contact between the two screws, and to ensure such a tight a contact between the screws and the housing in the compression chamber itself, it can be expedient to provide the inner wall of the compression chamber with a lining of rubber, and the windings of the screws, preferably that part of the surface which lies up against the housing, can expediently also be provided with a rubber membrane (27).

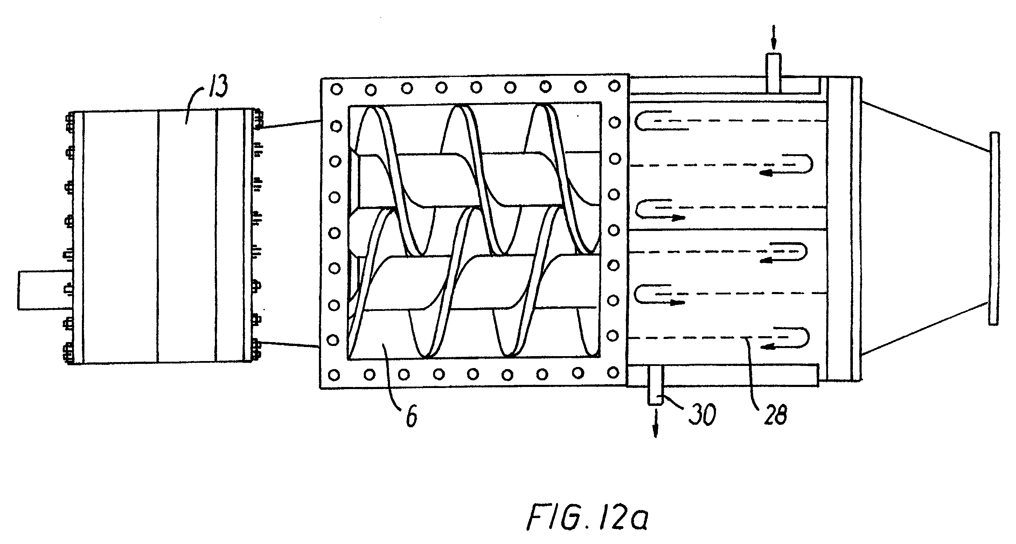

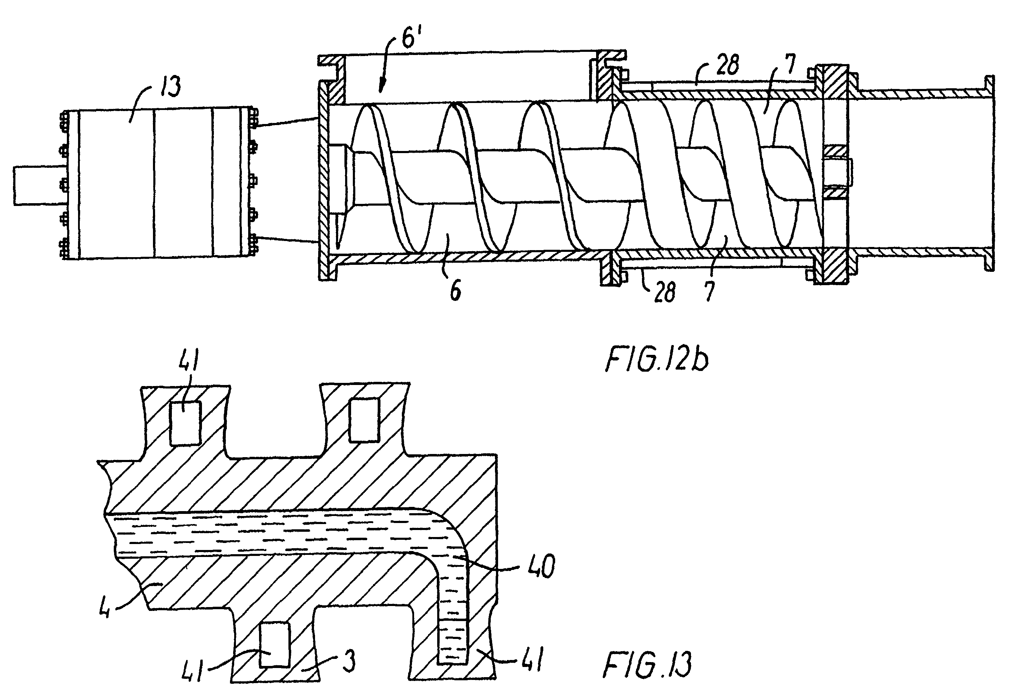

The screw conveyor can with advantage also be provided with a cooling/heating jacket in order to adjust the temperature of the material to be transported. An example of such a cooling/heating jacket (28) is seen in figs. 12a and 12b, which show a screw conveyor (1) like that shown in figs. 1 and 2, but where the compression chamber (7) is provided with a cooling/heating jacket (28) which lies wrapped around the compression chamber. In the one end of the jacket (28) there is provided an inlet opening (29) for the screw conveyor temperature-adjustment liquid, and in the other end an outlet (30) for the discharge of the relevant liquid, which can be transported back to a collection station for recirculation. The liquid flows in the jacket (28) in a zig-zag manner as is known from normal heat exchangers. The construction is particularly applicable with, for example:
- materials which do not tolerate an increase in temperature under compression,
- materials which must be heated to facilitate pumping, e.g. the use of a heating jacket when pumping frozen materials will give rise to a quite thin layer of thawed-out material. This will serve as a lubrication film and make transport considerably easier,
- materials which demand that the temperature is held constant, e.g. bread doughs.

Fig. 13 shows a section through a screw in its longitudinal direction, and shows the axle 4 in which in the central part there is provided a bore 40 through which a coolant or a heating medium can pass. The bore 40 typically lies as a minimum in the compression chamber, and where for example in the compression chamber's last winding it runs out in this, which is marked 41 in fig. 13, and where in the central part of the windings 3 there is milled a through-going cavity 41, so that the liquid can reach out to the windings and effect a cooling or a heating of these. The bore 41 thus follows the windings all the way back again towards the inlet chamber, where the liquid is again led out either directly to a recirculation pump or is led in to the inner pipe unit to the cavity 40 in the axle, through which the liquid can pass to that area from which it was supplied.

The screw conveyors disclosed have further appplications as follows:
1) The pumping of waste products from cleaning plants.
2) The pumping of pressed sludge from cleaning plants - the content of dry matter in the pressed sludge can be up to 45-50%.
3) Pumping of sediment from decanters - sediment is the solid substance which is separated in 2-stage and 3-stage decanters - the content of dry matter can be up to 55%.
4) Pumping of press-cakes from screw presses - content of dry matter can be up to 58%.
5) Pumping of heated rape etc. - heated by blowing steam into the product - content of dry matter can be up to 60%.
6) Pumping of slaughterhouse offal, e.g. bones, fat, intestines etc. - either separately or mixed together - can also be minced and transported further by means of the screws.
7) Pumping of frozen meat and frozen fish products etc.
8) Pumping of whole kidneys, lungs, liver, tripe etc. from pigs, sheep and cattle.
9) Pumping of poultry offal incl. bones and carcasses.
10) Pumping of fish and fish offal - incl. offal from tuna.
11) Course mincing of fish before boiling - to provide quick boiling through - after mincing the material is transported further via the screws.
12) Mincing of meat and fish products - for mink food - the product is transported further by the screws.
13) Double-mincing of meat and fish products etc. - the product can be transported further by the screws.
14) Unloading of fish etc. - the screw conveyor can stand on the quay or the fishing vessel, or can be lowered into the hold by means of a crane.
15) As oil skimming pump - for use in cases of oil pollution of the sea.

## Claims

1. Screw conveyor (1) for the transport of liquid substances and/or lumps of materials, comprising a rotatable first screw (2) provided with helical windings (3) arranged in a housing (5) with an inlet opening (6') and a discharge opening (11), in that between the inlet opening (6') and the discharge opening (11) said screw conveyor (1) comprises an inlet chamber (6) and a compression chamber (7), and also at least in the compression chamber (7) comprising at least one further helical screw (2) which rotates in the opposite direction to the first screw, each of the screw windings (3), at least in the compression chamber (7), having a thickness at their periphery which is at least 60% of the thickness elsewhere on the same winding (3), **characterized in that** the number of windings (3) for each screw (2) in the compression chamber (7) is greater than two, and that the distance between the windings (3) in the compression chamber (7) increases towards the compression chamber's (7) discharge opening (11) for each individual screw (2), **in that** the pitch of the windings in the compression chamber is progressive, so that the distance between the first and the second winding is less than the distance between the second and the third winding and so on.

2. Screw conveyor according to claim 1, **characterized in that** the progressive pitch of the windings (3), measured between two successive windings (3), is in the interval of 5-50% and preferably 15-45% in relation to the distance between two preceding windings (3).

3. Screw conveyor according to claims 1-2, **characterized in that** the screw conveyor (1) comprises means (18,22,32,28,41) which during function change the consistency of the substance, said means being disposed in and/or before the compression chamber (7).

4. Screw conveyor according to any of the foregoing claims, **characterized in that** the means comprise, at the housing (5) after the inlet opening (6') or as a part of this, means which effect a cutting function (18) by means of a cutting face.

5. Screw conveyor according to any of the foregoing claims, **characterized in that** after the inlet chamber (6), the screw conveyor (1) comprises at least one plate (22) with one or more holes and with a set of rotatable knives (32).

6. Screw conveyor according to any of the foregoing claims, **characterized in that** the means comprise cooling or heating elements (28) disposed in the screw conveyor's housing (5), preferably **in that** part which surrounds the compression chamber (7).

7. Screw conveyor according to any of the foregoing claims, **characterized in that** the means comprise cavities (41) forming a continuous inner channel in at least one of the screws (2), in which channel the liquid for heating or cooling passes through.

8. Screw conveyor according to any of the foregoing claims, **characterized in that** the windings (3) in the compression chamber (7), at those parts of their periphery which are surrounded by the housing (5), have a contact surface against said housing (5).

9. Screw conveyor according to any of the foregoing claims, **characterized in that** the windings (3) of the one screw (2) have a distance between two successive windings which is greater than or approximately coincident with the thickness of each of the adjacent windings.

10. Screw conveyor according to any of the foregoing claims, **characterized in that** a hinged door (8) in the housing (5) can be opened to provide access to the compression chamber (7).

11. Screw conveyor according to any of the foregoing claims, **characterized in that** the windings (3) disposed in the inlet chamber (6) are narrower than the windings on at least the one axle (4) in the compression chamber (7).

12. Screw conveyor according to any of the foregoing claims, **characterized in that** the windings on the one axle (4) in the compression chamber (7) have a thickness which corresponds to the space (14) between the windings (3) on the other axle (4').

13. Screw conveyor according to any of the foregoing claims, **characterized in that** the whole or parts of the inside of the housing (5) and/or the windings (3) are coated with rubber.

14. Screw conveyor according to any of the foregoing claims, **characterized in that** the screws (2) are produced from a solid block of metal which is processed mechanically, preferably by milling, in the production of the windings (3) and axle (4,4').

15. Use of the screw conveyor according to any of the foregoing claims for the transport of thinly-flowing and viscous sludge and offal.

## Patentansprüche

1. Schneckenfördereinrichtung (1) für Flüssigkeiten und/oder Materialbrokken, die eine drehbare erste Schnecke (2) umfaßt, die mit schraubenförmigen Windungen (3) versehen in einem Gehäuse (5) mit einer Einlaßöffnung (6') und einer Auslaßöffnung (11) angeordnet ist, wobei die Schneckenfördereinrichtung (1) zwischen der Einlaßöffnung (6') und der Auslaßöffnung (11) eine Einlaßkammer (6) und eine Druckkammer (7) umfaßt, und die auch zumindest in der Druckkammer (7) wenigstens eine weitere schraubenförmige Schnecke (2) umfaßt, die sich in der zu der ersten Schnecke entgegengesetzten Richtung dreht, wobei jede der schraubenförmigen Windungen (3), zumindest in der Druckkammer (7), an ihrem Umfang eine Dicke hat, die zumindest 60 % der sonstigen Dicke derselben Windung ist, **dadurch gekennzeichnet, daß** die Zahl der Windungen (3) bei jeder Schnecke (2) in der Druckkammer (7) größer als zwei ist und **daß** der Abstand zwischen den Windungen (3) in der Druckkammer (7) zu der Auslaßöffnung (11) der Druckkammer (7) hin bei jeder einzelnen Schnecke (2) zunimmt, indem die Steigung der Windungen in der Druckkammer zunehmend ist, so **daß** der Abstand zwischen der ersten und der zweiten Windung kleiner ist als der Abstand zwischen der zweiten und der dritten Windung und so weiter.

2. Schneckenfördereinrichtung nach Anspruch 1, **dadurch gekennzeichnet, daß** die zunehmende Steigung der Windungen (3), gemessen zwischen zwei einander folgenden Windungen (3), in dem Bereich von 5 - 50 % und vorzugsweise 15 - 45 % des Abstands zwischen zwei vorhergehenden Windungen (3) liegt.

3. Schneckenfördereinrichtung nach den Ansprüchen 1 - 2, **dadurch gekennzeichnet, daß** die Schneckenfördereinrichtung (1) Mittel (18, 22, 32, 28, 41) aufweist, die während des Arbeitens die Konsistenz der Flüssigkeiten und/oder Materialbrocken ändern und die in und/oder vor der Druckkammer (7) angeordnet sind.

4. Schneckenfördereinrichtung nach einem der vorhergehenden Ansprüche, **dadurch gekennzeichnet, daß** die Mittel, an dem Gehäuse (5) nach der Einlaßöffnung (6') oder als Teil davon, Mittel umfassen, die eine Schneidwirkung (18) mittels einer Schneidfläche entfalten.

5. Schneckenfördereinrichtung nach einem der vorhergehenden Ansprüche, **dadurch gekennzeichnet, daß** sie (1) nach der Einlaßkammer (6) wenigstens eine Platte (22) mit einem oder mehr Löchern und mit einem Satz von drehbaren Messern (32) umfaßt.

6. Schneckenfördereinrichtung nach einem der vorhergehenden Ansprüche, **dadurch gekennzeichnet, daß** die Mittel Kühl- oder Wärmeelemente (28) umfassen, die in dem Gehäuse (5) der Schneckenfördereinrichtung, vorzugsweise in dem Teil, der die Druckkammer (7) umgibt, angeordnet sind.

7. Schneckenfördereinrichtung nach einem der vorhergehenden Ansprüche, **dadurch gekennzeichnet, daß** die Mittel Höhlungen (41) aufweisen, die in wenigstens einer der Windungen (3) einen fortlaufenden inneren Kanal bilden, durch den die Flüssigkeit zum Wärmen oder Kühlen hindurchströmt.

8. Schneckenfördereinrichtung nach einem der vorhergehenden Ansprüche, **dadurch gekennzeichnet, daß** die Windungen (3) in der Druckkammer an denjenigen Teilen ihres Umfangs, die von dem Gehäuse (5) umgeben sind, eine Berührungsfläche gegenüber dem Gehäuse (5) haben.

9. Schneckenfördereinrichtung nach einem der vorhergehenden Ansprüche, **dadurch gekennzeichnet, daß** die Windungen (3) der einen Schnecke (2) einen Abstand zwischen zwei einander folgenden Windungen haben, der größer als oder annähernd übereinstimmend mit der Dicke jeder der beieinanderliegenden Windungen ist.

10. Schneckenfördereinrichtung nach einem der vorhergehenden Ansprüche, **dadurch gekennzeichnet, daß** eine mittels Gelenk drehbare Tür (8) in dem Gehäuse (5) öffenbar ist, um Zugang zu der Druckkammer (7) zu schaffen.

11. Schneckenfördereinrichtung nach einem der vorhergehenden Ansprüche, **dadurch gekennzeichnet, daß** die Windungen (3), die in der Einlaßkammer (6) angeordnet sind, enger vorgesehen sind als die Windungen auf zumindest der einen Welle (4) in der Druckkammer (7).

12. Schneckenfördereinrichtung nach einem der vorhergehenden Ansprüche, **dadurch gekennzeichnet, daß** die Windungen auf der einen Welle (4) in der Druckkammer (7) eine Dicke haben, die dem Raum (14) zwischen den Windungen (3) auf der anderen Welle (4) entsprechen.

13. Schneckenfördereinrichtung nach einem der vorhergehenden Ansprüche, **dadurch gekennzeichnet, daß** die Gesamtheit oder Teile der Innenseite des Gehäuses (5) und/oder der Windungen (3) mit Gummi beschichtet ist/sind.

14. Schneckenfördereinrichtung nach einem der vorhergehenden Ansprüche, **dadurch gekennzeichnet, daß** die Schnecken (2) aus einem festen Metallblock gefertigt sind, der bei der Erzeugung der Windungen (3) und der Wellen (4, 4') mechanisch bearbeitet ist, vorzugsweise durch Fräsen.

15. Verwendung der Schneckenfördereinrichtung nach einem der vorhergehenden Ansprüche zum Fördern von dünnflüssigem und viskosem Schlamm und Abfall.

## Revendications

1. Transporteur à vis sans fin (1) pour le transport de substances liquides et/ou de morceaux de matériaux, comportant une première vis rotative (2) munie d'enroulements hélicoïdaux (3) disposés dans un boîtier (5) muni d'une ouverture d'entrée (6') et d'une ouverture d'évacuation (11), ledit transporteur à vis sans fin (1) comportant une chambre d'entrée (6) et une chambre de compression (7) entre l'ouverture d'entrée (6') et l'ouverture d'évacuation (11), et comportant également au moins, dans la chambre de compression (7), au moins une vis hélicoïdale supplémentaire (2) qui tourne dans la direction opposée à la première vis, chacun des enroulements de vis (3), au moins dans la chambre de compression (7), ayant une épaisseur au niveau de leur périphérie qui est au moins de 60 % de l'épaisseur n'importe où sur le même enroulement (3), **caractérisé en ce que** le nombre d'enroulements (3) de chaque vis (2) dans la chambre de compression (7) est supérieur à deux, et **en ce que** la distance entre les enroulements (3) dans la chambre de compression (7) augmente vers l'ouverture d'évacuation (11) de la chambre de compression (7) pour chaque vis individuelle (2), **en ce que** le pas des enroulements dans la chambre de compression est progressif, de sorte que la distance entre le premier et le deuxième enroulement est inférieure à la distance entre le deuxième et le troisième enroulement, et ainsi de suite.

2. Transporteur à vis sans fin selon la revendication 1, **caractérisé en ce que** le pas progressif des enroulements (3) mesuré entre deux enroulements (3) successifs, est dans l'intervalle allant de 5 à 50 %, et de préférence de 15 à 45 % par rapport à la distance existant entre deux enroulements précédents (3).

3. Transporteur à vis sans fin selon la revendication 1 ou 2, **caractérisé en ce que** le transporteur à vis sans fin (1) comporte des moyens (18, 22, 32, 28, 41) qui, pendant un fonctionnement, changent la consistance de la substance, lesdits moyens étant disposés dans et/ou avant la chambre de compression (7).

4. Transporteur à vis sans fin selon l'une quelconque des revendications précédentes, **caractérisé en ce que** les moyens comportent, au niveau du boîtier (5) situé après l'ouverture d'entrée (6') ou en tant que partie de celui-ci, des moyens qui effectuent une fonction de coupe (18) par l'intermédiaire d'une face de coupe.

5. Transporteur à vis sans fin selon l'une quelconque des revendications précédentes, **caractérisé en ce que** après la chambre d'entrée (6), le transporteur à vis sans fin (1) comporte au moins une plaque (22) munie d'un ou de plusieurs trous et d'un ensemble de lames rotatives (32).

6. Transporteur à vis sans fin selon l'une quelconque des revendications précédentes, **caractérisé en ce que** les moyens comportent des éléments de refroidissement ou de chauffage (28) disposés dans le boîtier de transporteur à vis sans fin (5), de préférence dans la partie qui entoure la chambre de compression (7).

7. Transporteur à vis sans fin selon l'une quelconque des revendications précédentes, **caractérisé en ce que** les moyens comportent des cavités (41) formant un canal intérieur continu dans au moins une des vis (2), canal que traverse le liquide pour chauffer ou refroidir.

8. Transporteur à vis sans fin selon l'une quelconque des revendications précédentes, **caractérisé en ce que** les enroulements (3) dans la chambre de compression (7), au niveau des parties de leur périphérie qui sont entourées par le boîtier (5), ont une surface de contact contre ledit boîtier (5).

9. Transporteur à vis sans fin selon l'une quelconque des revendications précédentes, **caractérisé en ce que** les enroulements (3) d'une première vis (2) ont une distance entre deux enroulements successifs qui est supérieure à l'épaisseur de chacun des enroulements adjacents, ou approximativement égale à celle-ci.

10. Transporteur à vis sans fin selon l'une quelconque des revendications précédentes, **caractérisé en ce qu'**une porte articulée (8) située dans le boîtier (5) peut être ouverte pour fournir un accès à la chambre de compression (7).

11. Transporteur à vis sans fin selon l'une quelconque des revendications précédentes, **caractérisé en ce que** les enroulements (3) disposés dans la chambre d'entrée (6) sont plus étroits que les enroulements situés sur au moins le premier axe (4) de la chambre de compression (7).

12. Transporteur à vis sans fin selon l'une quelconque des revendications précédentes, **caractérisé en ce que** les enroulements situés sur le premier axe (4) de la chambre de compression (7) ont une épaisseur qui correspond à l'espace (14) existant entre l'enroulement (3) et l'autre axe (4' ) .

13. Transporteur à vis sans fin selon l'une quelconque des revendications précédentes, **caractérisé en ce que** la totalité ou des parties de l'intérieur du boîtier (5) et/ou des enroulements (3), sont revêtus de caoutchouc.

14. Transporteur à vis sans fin selon l'une quelconque des revendications précédentes, **caractérisé en ce que** les vis (2) sont produites à partir d'un bloc de métal solide qui est traité de manière mécanique, de préférence par fraisage, lors de la production des enroulements (3) et de l'axe (4, 4').

15. Utilisation du transporteur à vis sans fin selon l'une quelconque des revendications précédentes, pour le transport de boue visqueuse et s'écoulant de manière mince et de déchets.
